# FASCICULE DE BREVET EUROPEEN

(11) **EP 2 526 459 B1**
(45) Date de publication et mention de la délivrance du brevet: **26.08.2020**
(21) Numéro de dépôt: 11706294.3
(22) Date de dépôt: 14.01.2011
(51) Int. Cl.: G02F 1/35, H04L 9/08

(54) **SOURCE DE PAIRES DE PHOTONS INTRIQUÉS EN POLARISATION ET SON PROCÉDÉ DE FABRICATION**
QUELLE VON POLARISATIONSVERSCHRÄNKTEN PHOTONENPAAREN UND HERSTELLUNGSVERFAHREN DAFÜR
SOURCE OF POLARISATION-ENTANGLED PHOTON PAIRS AND FABRICATION METHOD THEREOF

(30) Priorité: 19.01.2010 FR 1000195
(43) Date de publication de la demande: 28.11.2012
(73) Titulaire: Centre National de la Recherche Scientifique, 75016 Paris (FR)
(72) Inventeur: SENELLART, Pascale, 91400 Orsay (FR); DOUSSE, Adrien, North Point Hong Kong (CN)
(74) Mandataire: Priori, Enrico
(86) Numéro de dépôt international: PCT/FR2011/000021
(87) Numéro de publication internationale: WO 2011/089336

(56) Documents cités:
- STACE T M ET AL: "Entangled two-photon source using biexciton emission of an asymmetric quantum dot in a cavity", PHYSICAL REVIEW B (CONDENSED MATTER AND MATERIALS PHYSICS) APS THROUGH AIP USA, vol. 67, no. 8, 085317, 15 février 2003 (2003-02-15), pages 85317-1-85317-15, XP002599441, ISSN: 0163-1829 cité dans la demande -& BENSON O ET AL: "Regulated and entangled photons from a single quantum dot", PHYSICAL REVIEW LETTERS APS USA, vol. 84, no. 11, 13 mars 2000 (2000-03-13) , pages 2513-2516, XP002599807, ISSN: 0031-9007
- BAYER M ET AL: "Optical modes in photonic molecules", PHYSICAL REVIEW LETTERS APS USA, vol. 81, no. 12, 21 septembre 1998 (1998-09-21), pages 2582-2585, XP002599442, ISSN: 0031-9007
- DOUSSE A ET AL: "Controlled light-matter coupling for a single quantum dot embedded in a pillar microcavity using far-field optical lithography", PHYSICAL REVIEW LETTERS AMERICAN PHYSICAL SOCIETY USA, vol. 101, no. 26, 31 décembre 2008 (2008-12-31), XP002599443, ISSN: 0031-9007 cité dans la demande
- SVETLANA V BORISKINA ED - FARAMARZ E SERAJI ET AL: "Control of Modes Coupling, Selection and Enhancement in Wavelength-Scale Optical Microcavity Structures: Applications to Microlasers and Biosensing", LASER AND FIBER-OPTICAL NETWORKS MODELING, 8-TH INTERNATIONAL CONFEREN CE ON, IEEE, PI, 1 juin 2006 (2006-06-01), pages 391-398, XP031020458, ISBN: 978-1-4244-0233-5
- GERARD J M ET AL: "Enhanced spontaneous emission by quantum boxes in a monolithic optical microcavity", PHYSICAL REVIEW LETTERS APS USA, vol. 81, no. 5, 3 août 1998 (1998-08-03), pages 1110-1113, XP002599446, ISSN: 0031-9007
- KARL M ET AL: "Localized and delocalized modes in coupled optical micropillar cavities", OPTICS EXPRESS 20070625 OPTICAL SOCIETY OF AMERICA US, vol. 15, no. 13, 25 juin 2007 (2007-06-25) , pages 8191-8196, XP002599444, DOI: DOI:10.1364/OE.15.008191
- KISTNER C ET AL: "Cavity quantum electrodynamics effects in electrically driven high-Q micropillar cavities", NANO-OPTOELECTRONICS WORKSHOP, 2008. I-NOW 2008. INTERNATIONAL, IEEE, PISCATAWAY, NJ, USA, 2 août 2008 (2008-08-02), pages 239-240, XP031395902, ISBN: 978-1-4244-2656-0
- BORISKINA S V: "Spectrally engineered photonic molecules as optical sensors with enhanced sensitivity: a proposal and numerical analysis", JOURNAL OF THE OPTICAL SOCIETY OF AMERICA B (OPTICAL PHYSICS) OPT. SOC. AMERICA USA, vol. 23, no. 8, août 2006 (2006-08), pages 1565-1573, XP002599445, ISSN: 0740-3224
- Adrien Dousse ET AL: "Ultrabright source of entangled photon pairs", Nature, vol. 466, no. 7303, 8 July 2010 (2010-07-08), pages 217-220, XP055116368, ISSN: 0028-0836, DOI: 10.1038/nature09148
- LARQUÉ M ET AL: "Optimizing H1 cavities for the generation of entangled photon pairs", NEW JOURNAL OF PHYSICS, INSTITUTE OF PHYSICS PUBLISHING, BRISTOL, GB, vol. 11, no. 3, 1 March 2009 (2009-03-01), page 33022, XP020154434, ISSN: 1367-2630, DOI: 10.1088/1367-2630/11/3/033022
- Vahala K J: "Optical Microcavities", NATURE, vol. 424 14 August 2003 (2003-08-14), pages 839-846, XP55270877, DOI: 10.1038/nature01939 Retrieved from the Internet: URL:http://www.nature.com/nature/journal/v 424/n6950/pdf/nature01939.pdf [retrieved on 2016-05-06]

## Description

L'invention porte sur une source de paires de photons intriqués - et plus précisément intriqués en polarisation - et sur son procédé de fabrication. Elle s'applique en particulier au domaine de la cryptographie quantique, et plus généralement à celui de l'information quantique.

La cryptographie quantique est une technologie en plein essor, qui exploite les lois de la mécanique quantique pour assurer une confidentialité parfaite des communications en permettant de détecter l'interception d'un message (notamment une clé de cryptage) transmis en utilisant un protocole de communication basé sur l'utilisation de photons isolés.

L'une des principales difficultés rencontrées dans la mise en œuvre de systèmes pratiques de cryptographie quantique est la gestion des pertes en ligne. En effet, il n'est pas possible d'amplifier le signal transmis sans perdre la sécurité de la communication. Pour pouvoir transmettre des clés de cryptage de manière sécurisée sur des distances de plusieurs centaines de kilomètres il est nécessaire de mettre en place des appareils connus sous le nom de « relais quantiques », dont le composant essentiel est une source de paires de photons intriqués. On rappelle que deux photons sont dit intriqués lorsqu'ils sont décrits conjointement par un état quantique qui n'est pas séparable, c'est-à-dire qui ne peut pas être écrit sous la forme d'un produit tensoriel entre deux états décrivant chacun un seul photon.

Idéalement, une source de paires de photons intriqués devrait émettre une telle paire - et une seule - à chaque fois qu'elle reçoit une impulsion excitatrice. Or, les sources actuellement disponibles sont très limitées en débit : pour chaque impulsion excitatrice il n'y a qu'une probabilité de l'ordre de 2 - 5% qu'une paire de photons intriqués soit effectivement émise et collectée.

Il existe principalement deux techniques de génération de paires de photons intriqués en polarisation : la conversion paramétrique de fréquences dans un milieu optique non linéaire et la cascade radiative dans une boite quantique semi-conductrice.

La conversion paramétrique est un effet optique non-linéaire : un photon à une fréquence υ₁ se propageant dans un milieu présentant une susceptibilité électrique non linéaire au 2^{e} ordre peut se scinder en deux photons intriqués de fréquences υ₂ et υ₃, avec υ₂ + υ₃ = υ₁. Il existe une limitation intrinsèque au débit d'une source basée sur cet effet, car la lumière émise présente une statistique poissonienne. La probabilité d'émission de deux paires de photons est proportionnelle au carré de la probabilité d'émission d'une seule paire. Il n'est donc possible de garantir que la probabilité d'émission de plus d'une paire de photons par impulsion pompe soit négligeable qu'à la condition que la probabilité d'émission d'une seule paire soit faible, typiquement de l'ordre de 5%. Ainsi seulement 5% environ des impulsions de pompe donnent effectivement lieu à l'émission d'une paire de photons intriqués.

Dans la cascade radiative qui se produit dans un émetteur quantique tel qu'une boîte quantique semi-conductrice, une paire de photons intriqués peut être générée pour chaque impulsion excitatrice. Cependant, ces photons sont émis de façon isotrope dans un milieu à fort indice optique, ce qui fait que seule une petite fraction d'entre eux - de l'ordre de 2% - peut être extraite.

La présente invention vise à permettre la réalisation d'une source « à haut débit », émettant une et une seule paire de photons intriqués en polarisation à chaque impulsion excitatrice, ou au moins avec une probabilité sensiblement plus élevée que dans les sources connues de l'art antérieur. Conformément à l'invention, cet objectif est atteint en augmentant l'efficacité d'extraction des paires de photons émises par cascade radiative dans un émetteur quantique.

Une première idée à la base de l'invention est de placer l'émetteur quantique générateur dans une cavité optique afin de faciliter l'extraction des photons émis par effet Purcell. Cette technique est connue par elle-même, et exploitée notamment pour la réalisation de sources de photons isolés. Mais, sans précaution particulière, elle ne permet pas de préserver l'intrication entre les photons d'une même paire. Une deuxième idée à la base de l'invention est de prévoir une deuxième cavité, couplée à la première. Le couplage des deux cavités (« molécule photonique ») permet d'extraire de manière efficace les photons générés sans affecter défavorablement leur intrication.

Un objet de l'invention est donc une source de paires de photons intriqués en polarisation selon la revendication 1.

Les excitations élémentaires peuvent être des excitons (paires électron/trou liées par interaction coulombienne), auquel cas on parle d'états « excitoniques » et « biexcitoniques ».

Deux modes ou deux états quantiques sont considérés dégénérés lorsque leur écart énergétique (qui n'est jamais exactement nul) est inférieur à leur largeur spectrale (qui est toujours finie).

Différents modes de réalisation de l'invention font l'objet des revendications dépendantes.

Un autre objet de l'invention est un procédé de fabrication d'une telle source de paires de photons intriqués selon la revendication 8.

D'autres caractéristiques, détails et avantages de l'invention ressortiront à la lecture de la description faite en référence aux dessins annexés donnés à titre d'exemple et qui représentent, respectivement :
- la figure 1, le diagramme des états énergétiques d'un émetteur quantique - et plus précisément d'une boîte quantique - susceptible d'être utilisé pour la mise en œuvre de l'invention ;
- la figure 2, le processus de génération d'une paire de photons intriqués dans une telle boîte quantique ;
- la figure 3, une boîte quantique couplée à une cavité optique de type « micropilier » ;
- les figures 4A et 4B, une vue en élévation et en coupe d'une source selon un mode de réalisation de l'invention, constituée par une boîte quantique couplée à une « molécule photonique » formée par deux cavités optiques identiques ;
- les figures 5A, 5B et 5C des diagrammes énergétiques des modes d'une « molécule photonique » en fonction de la distance entre les cavités optiques couplées ;
- la figure 6, des images des diagrammes de rayonnement d'une molécule photonique ;
- la figure 7, un diagramme illustrant une technique d'accord en fréquence d'une « molécule photonique » ;
- les figure 8A et 8B, respectivement, une « molécule photonique » dissymétrique et la distribution spatiale d'intensité optique pour deux modes d'une telle molécule ; et

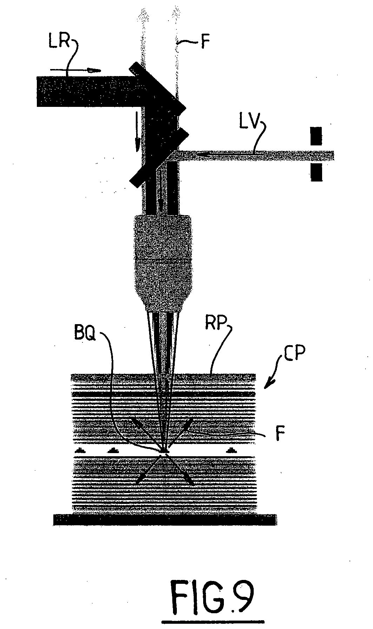

- la figure 9, une illustration d'un procédé de fabrication de la source de l'invention.

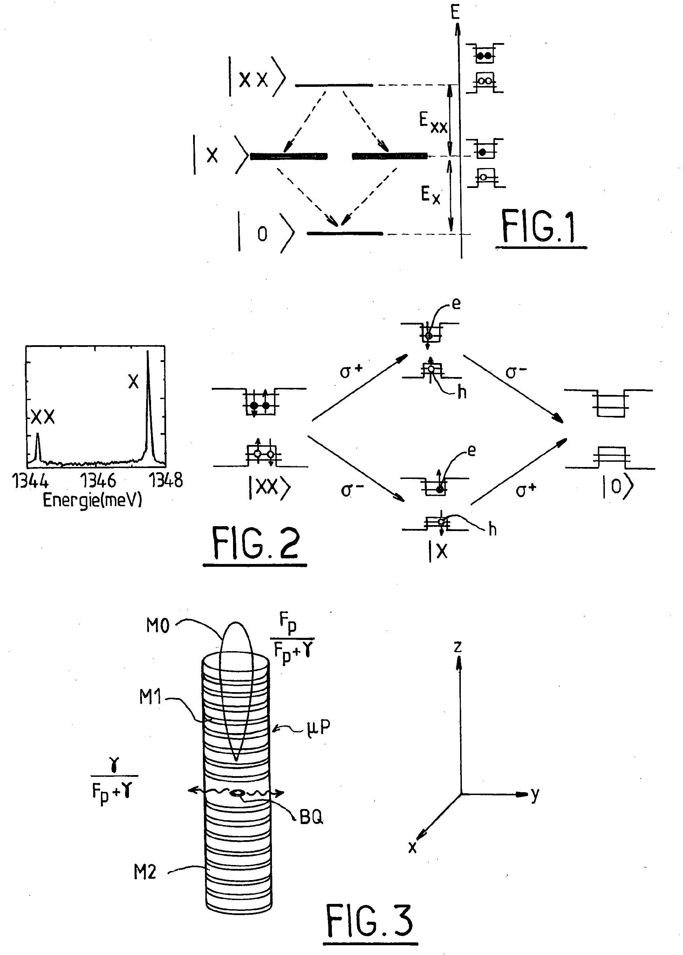

Une boîte quantique semi-conductrice est une insertion de taille nanométrique de matériau de petite bande interdite dans un matériau de grande bande interdite. Une boîte quantique est un piège pour les porteurs dans les trois directions de l'espace de sorte que les états d'énergie permis sont discrets. En particulier, si l'on piège deux paires électrons-trous dans une boîte quantique, deux photons vont être émis successivement : ces deux photons sont émis à deux énergies différentes, E_{XX} pour la transition biexciton-exciton et E_{X} pour la transition exciton-état fondamental, car l'interaction entre les porteurs piégés au sein de la boîte quantique est différente suivant que deux ou quatre porteurs sont présents (voir le diagramme d'énergie de la figure 1 et le spectre d'émission sur la gauche de la figure 2). L'état de la boîte quantique occupé par deux paires électrons-trou est appelé dans la suite biexciton (XX) et celui à une paire exciton (X).

Le biexciton XX est un état dont le spin n'est pas défini. Au contraire l'exciton X peut présenter deux états de spins différents : spin de l'électron (e) « orienté vers le haut » et spin du trou (h) « orienté vers le bas », ou inversement. La transition de l'état biexcitonique vers un premier état excitonique s'accompagne de l'émission d'un photon d'énergie E_{XX} polarisé circulairement vers la droite (σ+) ; puis la transition vers l'état fondamental s'accompagne de l'émission d'un photon d'énergie E_{X} polarisé circulairement vers la gauche (σ-). Inversement, la transition de l'état biexcitonique vers le deuxième état excitonique s'accompagne de l'émission d'un photon d'énergie E_{XX} polarisé circulairement vers la gauche (σ-) ; puis la transition vers l'état fondamental s'accompagne de l'émission d'un photon d'énergie E_{X} polarisé circulairement vers la droite (σ+).

Suivant les propriétés géométriques de la boîte quantique, les deux états de spin excitoniques peuvent être dégénérés ou non. Dans le cas dégénéré (c'est-à-dire lorsque la différence d'énergie entre les deux états, sans être nulle, est inférieure à leur largeur - nécessairement finie), les deux chemins de recombinaison possibles entre l'état biexcitonique XX et l'état fondamental 0 sont indiscernables et les photons émis sont intriqués en polarisation (voir la figure 2). Dans le cas où la différence d'énergie entre les deux états excitoniques est plus grande que la largeur des transitions, les photons émis sont corrélés en polarisation mais non intriquées.

L'émission de paires de photons intriqués en polarisation par cascade radiative dans une boîte quantique semi-conductrice a été prévue par O. Benson et collaborateurs : « Regulated and Entangles Photons from a Single Quantum Dot », Phys. Rev. Lett. 84, 2513 (2000), ainsi que par T. M. Stace et al., « Entangled two-photon source using biexciton emission of an asymmetric quantum dot in a cavity » Phys. Rev. B, 67, 085317 (2003), puis démontrée expérimentalement par plusieurs groupes ; voir par exemple R. M. Stevenson et al., «A semiconductor source of triggered entangled photon pairs », Nature 439, 179 (2006).

Comme toute source ponctuelle, une boîte quantique émet les photons de façon quasi-isotropique. Par ailleurs, la boîte quantique se trouve insérée dans un milieu optique d'indice relativement élevé (par exemple, 3,5 dans le cas d'une matrice en GaAs. Ainsi, du fait de la réflexion totale interne à l'interface air/semi-conducteur (indice 1 et 3.5 respectivement), seul 6% environ des photons émis par la boîte quantique sortent effectivement du semi-conducteur, et moins de 1-3 % peuvent être couplés efficacement à une fibre optique.

Le problème de l'extraction des photons se pose également lorsque les boîtes quantiques sont utilisées en tant que sources de photons uniques. Il a été résolu, dans ce domaine, en exploitant un phénomène connu sous le nom d' « effet Purcell ». Voir à ce propos l'article de E. Moreau et al. « Single-mode solid-state photon source based on isolated quantum dots in pillar microcavities », Appl. Phys. Lett. 79, 2865 (2001), ainsi que l'article de J.-M Gérard et B. Gayral « Strong Purcell Effect for InAs Quantum Boxes in Three-Dimensional Solid-State Microcavities », J. Lightwave Technol. 17, 2089 (1999).

Il est connu que le taux d'émission spontanée d'un émetteur dépend de l'environnement électromagnétique. Ainsi, en plaçant un émetteur dans une cavité optique qui confine le champ électromagnétique, il est possible d'accélérer son émission spontanée d'un facteur Fₚ appelé facteur de Purcell. Ce faisant, l'émission de cet émetteur est redirigé dans le mode de cavité et la fraction d'émission dans le mode est Fₚ/(Fₚ+γ), γ étant le taux de recombinaison radiative dans les autres modes de la structure, normalisé au taux d'émission dans le semi-conducteur massif. Ainsi, avec un facteur γ≅1 et un facteur de Purcell de Fₚ=5, 83% des photons peuvent être collectés, et plus de 90% avec un facteur de Purcell de Fₚ=10. La figure 3 illustre ce principe pour une cavité de type micropilier µP. Dans une telle cavité, deux miroirs interférentiels ou « de Bragg » M1, M2 confinent le champ selon la direction z. Le contraste d'indice entre le matériau et l'air assure le confinement dans les deux autres directions (effet de guidage type fibre optique). Une fraction Fₚ/(Fₚ+γ) des photons est émise dans le mode MO de la cavité, tandis que la fraction restante - égale à γ/(Fₚ+γ) - est émise dans les autres modes.

Dans le cas d'un émetteur quantique inséré dans une cavité optique de type micropilier, le taux d'émission spontanée γ a une valeur proche de 1. Pour obtenir un taux d'extraction élevé, par exemple de l'ordre de 75%, il faut donc Fₚ≥3. D'autres cavités, par exemple des cavités à cristaux photonique ou des micropiliers dont la surface latérale est métallisée, présentent des facteurs γ<<1 (par exemple de l'ordre de 0,1). Dans ce cas, même un facteur de Purcell de l'ordre de 1 permet d'atteindre des taux d'extraction très satisfaisants.

L'article précité de O. Benson et al. évoque la possibilité d'exploiter l'effet Purcell pour favoriser l'extraction des paires de photons intriqués émises par une boîte quantique. Cependant, il s'agit là d'un travail de type théorique qui détaille une méthode d'extraction d'un photon unique et propose son extension à des paires de photons intriqués sans tenir compte des conditions à réunir pour extraire ces paires tout en préservant l'intrication. En réalité, l'application de la technique d'extraction par effet Purcell à la génération de paires de photons intriqués se heurte à une difficulté fondamentale. En effet, lorsqu'on souhaite utiliser une boîte quantique couplée à une cavité optique comme source à haut rendement de photons uniques il suffit d'accorder la cavité à la seule transition XX→X, ou à la seule transition X→0. Au contraire, dans le cas de paires de photons intriqués, la cavité doit être résonante avec les deux transitions. Cela ne peut pas être obtenu, en général, en agissant sur le seul paramètre dont on dispose en pratique pour accorder une cavité optique de dimensions microscopiques susceptible d'être couplée à une boîte quantique, c'est-à-dire sa taille.

Il y a aussi deux conditions supplémentaires qui doivent être respectées afin de ne pas réduire le degré d'intrication en polarisation entre les photons. Premièrement, il faut que les modes de la cavité soient dégénérés en polarisation, autrement un des deux chemins de recombinaison radiative serait favorisé par rapport à l'autre. Deuxièmement, il faut que les modes de la cavité de même longueur d'onde mais de polarisation différente présentent des diagrammes de rayonnements presque identiques entre eux, de sorte qu'aucune information sur le chemin de recombinaison radiative du biexciton ne puisse être obtenue par l'observation de ces diagrammes de rayonnement. Il importe de noter que la dégénérescence n'implique pas par elle-même superposition des diagrammes de rayonnement ; voir à ce propos l'article de M. Larqué et al. « Optimized H1 cavities for the generation of entangled photon pairs », New Journal of Physics, 11 (2009) 033022.

A cause de ces contraintes, il a été impossible jusqu'à présent d'extraire les paires de photons intriqués en polarisation générées par une boîte quantique avec une efficacité satisfaisante.

Dans la source de l'invention, les photons intriqués émis par une boîte quantique sont extraits efficacement grâce à une « molécule photonique », c'est-à-dire à une structure formée par deux cavités optiques, de préférence susceptibles de confiner la lumière en trois dimensions, couplées entre elles et avec la boîte quantique

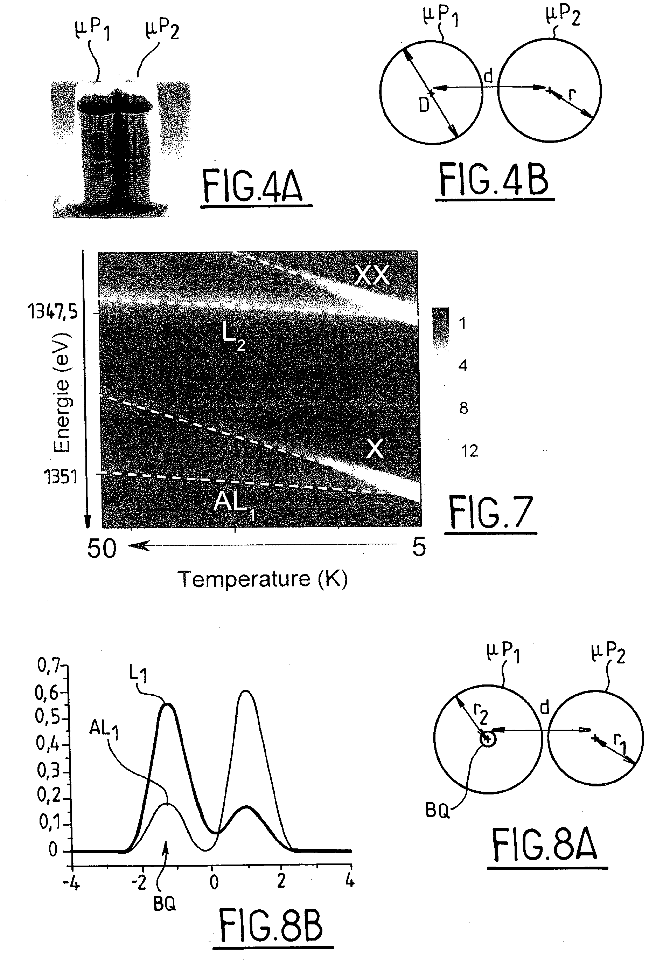

Lorsque deux cavités sont approchées l'une de l'autre, leurs champs électromagnétiques évanescents se recouvrent partiellement. Un couplage entre les deux cavités apparaît et de nouveaux modes optiques sont définis. La taille (diamètre D ou, de manière équivalente, rayon r) des cavités individuelles peut alors être choisie pour obtenir une longueur d'onde de résonance intermédiaire entre les deux longueurs d'ondes des transitions biexciton-exciton et exciton-état fondamental. La distance (d) entre les deux cavités permet ensuite de lever la dégénérescence entre les deux modes de cavités couplées et d'ajuster lesdits modes aux énergies E_{X} et E_{XX}. La figure 4A montre une image au microscope électronique à balayage d'une structure (« molécule photonique ») formée par deux cavités de type à micropilier, µP1 et µP2. La figure 4B montre - de manière très schématique - une vue en coupe d'une telle structure ; on considère ici que les deux cavités sont identiques, même si cela n'est pas essentiel, comme cela sera expliqué par la suite.

Les présents inventeurs se sont rendu compte du fait que, pour des cavités présentant des modes dégénérés en polarisation, ce couplage peut être obtenu tout en maintenant des modes couplés essentiellement non polarisés. En raison de leur symétrie circulaire, les cavités de type micropilier, prises individuellement, présentent des modes dégénérés en polarisation. A cause du couplage, chaque mode de la cavité se scinde en deux modes d'énergie différente ; mais d'une manière surprenante, malgré l'évidente rupture de symétrie, la dégénérescence en polarisation est sensiblement préservée (la différence d'énergie entre les modes polarisés parallèlement ou perpendiculairement à l'axe de la « molécule » reste très petite devant la largeur spectrale de résonance des modes). Cette propriété est essentielle pour préserver l'indiscernabilité des deux photons émis.

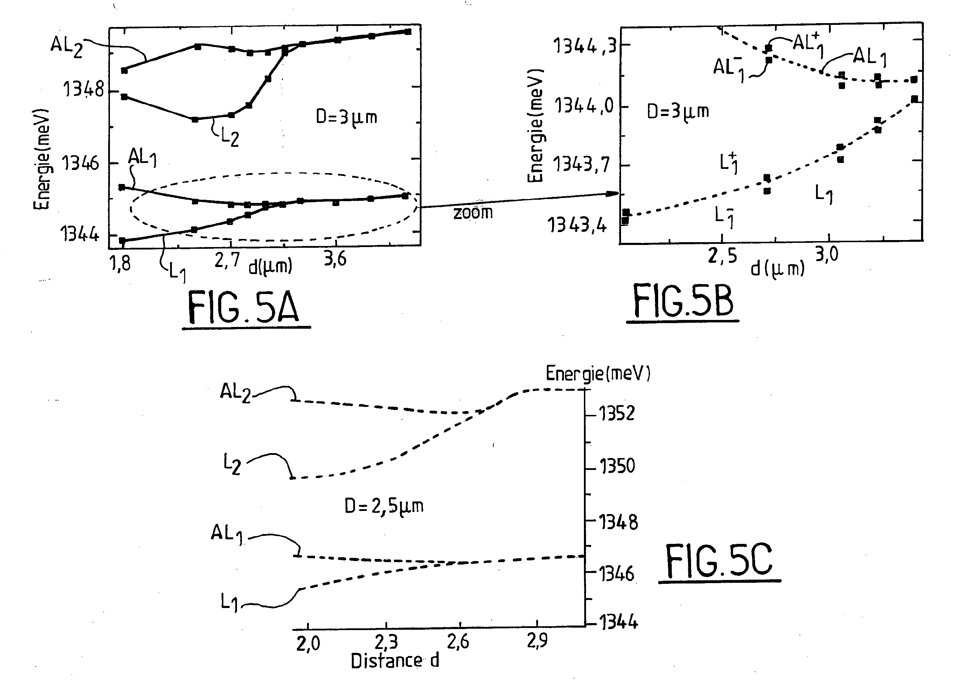

Les figures 5A - 5C montrent les énergies (en milliélectronvolts meV) des modes photoniques mesurés sur des molécules photoniques formées par deux piliers en GaAs/AIAs (index de réfraction moyen de 3,2) de diamètre D=3 µm (figure 5A et son agrandissement 5B) et D=2,5 µm (figure 5C), pour plusieurs distances d centre à centre. Pour deux piliers très éloignés, les quatre modes optiques sont dégénérés en longueur d'onde et de polarisation circulaire. Lorsque les piliers sont rapprochés, le couplage entre les deux cavités lève cette dégénérescence: les quatre modes sont répartis en deux longueurs d'onde (mode liant L₁ et anti-liant AL₁). Pour chacune de ces longueurs d'onde (L₁ ou AL₁), la molécule photonique présente deux modes (+ et -) d'énergie très voisine. En d'autres termes, la molécule présente une première paire de modes dégénérés en polarisation (L₁+, L₁-), et une deuxième paire de modes dégénérés en polarisation (AL₁+, AL₁-) d'énergie plus élevée. Seulement pour des couplages très forts la dégénérescence en polarisation est levée, et chaque mode présente une polarisation linéaire.

Dans toute la gamme de couplage intermédiaire, où l'écart en énergie entre les modes AL₁+ et AL₁- (ou L₁+ et L₁-) est très inférieur à la largeur spectrale des modes, il est possible d'ajuster la taille des cavités et leur distance centre à centre pour accorder les modes AL₁ et L₁ avec les transitions XX→X et X→0 d'une boîte quantique. Les modes AL₁ et L₁ sont alors non polarisés et permettent une extraction efficace de paires de photons intriquées en polarisation.

En réalité, chaque cavité individuelle présente une pluralité de modes qui se dédoublent suite au couplage. Par conséquence, la molécule photonique présente également des modes L₂, AL₂ issus du dédoublement du deuxième mode de chaque micropilier, et ainsi de suite. Les paramètres d et D de la molécule photonique peuvent être choisis de manière à accorder les transitions XX→X et X→0 avec deux quelconques de ces modes.

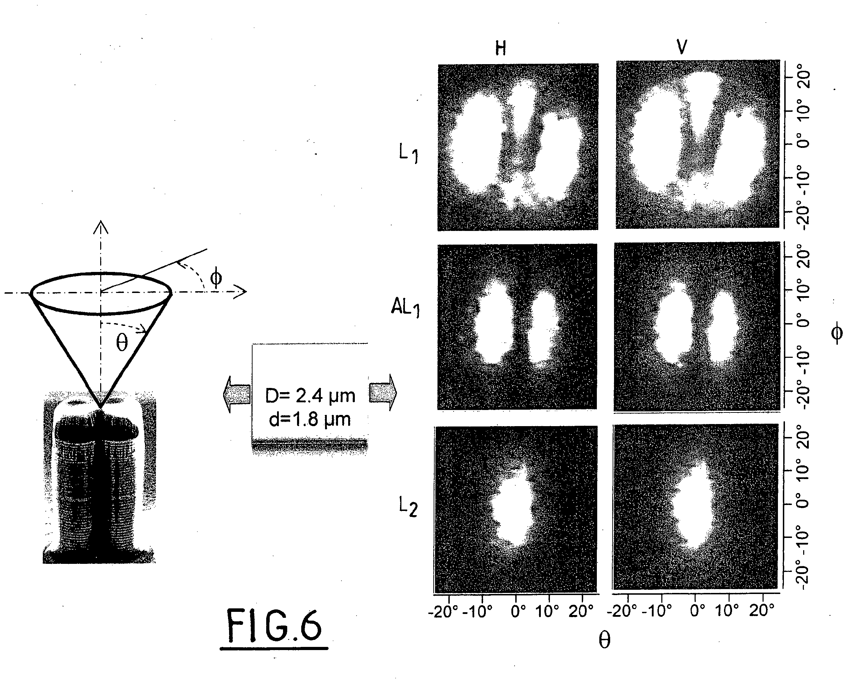

Par ailleurs les modes AL₁+ / AL₁-, L₁+ / L₁- et L₂+ / L₂-présentent des diagrammes de rayonnement se recouvrant à plus de 95% de sorte qu'aucune information sur le chemin de recombinaison radiative du biexciton ne peut être obtenue par l'observation du diagramme de rayonnement. Cela est illustré par la figure 6 ; cette figure montre des images des diagrammes de rayonnement des modes AL₁, L₁ et L₂ en polarisation linéaire H (parallèle à l'axe de la molécule) et V (perpendiculaire audit axe) ; de l'identité substantielle des diagrammes de rayonnement des modes polarisés linéairement (H/V) on peut déduire celle des modes polarisés circulairement (+/-), qui en sont des combinaisons linéaires. Il s'agit de diagrammes angulaires : cela signifie que les axes des figures correspondent aux angles θ et φ, dont la définition est donnée par la figure. Ces résultats correspondent au cas D=2,4 µm et d=1,8 µm.

La figure 7 montre un diagramme de l'intensité d'émission d'une boîte quantique couplée à une molécule photonique en fonction de la température. A 5K les transitions X→0 et XX→X sont en résonance avec les modes L₂ et AL₁ de la molécule photonique. Cette figure montre que les modes de la molécule photoniques peuvent être accordés avec les transitions de la boîte quantique par un contrôle fin de la température T. Une forte augmentation de l'intensité du signal est observée lorsque les transitions X→0 et XX→X sont en résonance avec les modes L₂ et AL₁. Cette augmentation de signal est la signature de la redirection de l'émission grâce à l'accélération de l'émission spontanée pour les deux transitions de la boîte quantique. Le taux d'extraction des photons est alors donné par Fₚ/(Fₚ+1) car le taux d'émission spontanée est de l'ordre de celui dans le matériau massif pour ce type de cavité (γ ≈ 1).

La figure 7 montre que la source considérée dans l'exemple opère à des températures cryogéniques, inférieures à 70K. Cette limitation est inhérente à l'utilisation d'une boîte quantique de type InAs/GaAs émettant à 900 nm. Cependant, l'invention peut s'appliquer à tout type d'émetteur quantique unique dans lesquelles une cascade radiative se produit. Ces émetteurs sont du type réalisant un confinement des porteurs en trois dimensions. A titre d'exemple, les nanocristaux de semi-conducteurs II-VI sont de bons candidats pour réaliser de telles sources fonctionnant à température plus élevée.

Pour que le léger dédoublement des raies en polarisation linéaire AL₁+ et AL₁- (L₁+ et L₁- ; L₂+ et L₂-) n'influe pas sur le degré d'intrication des paires de photons émis, la largeur de raie des modes de cavité est choisie très supérieure à l'écart en énergie des modes AL₁+ et AL₁- (L₁+ et L₁- ; L₂+ et L₂-). A titre d'exemple, pour deux piliers en GaAs/AIAs avec D=3µm, la différence d'énergie entre deux modes de polarisation différente est environ 50 µeV, tandis que la largeur de chaque mode est d'environ 400 µeV. Le facteur de Purcell est de l'ordre de 5 ce qui garantit une collection de l'ordre de 80%.

Dans l'exemple de la figure 7, la transition X→0 est à plus haute énergie que la transition XX→X. Le principe de l'invention reste le même dans le cas contraire : le mode AL₁ sera alors résonant avec la transition X→0 et le mode L₂ avec la transition XX→X. Plus généralement, tous les modes de la molécule photonique (L₁, AL₁, L₂, AL₂...) pourront être accordés aux deux transitions XX→X et X→0.

La source de l'invention peut être optimisée de différentes façons.

Pour atteindre une extraction de 80% des photons vers le haut de la structure, il faut choisir une réflectivité du miroir arrière supérieure à celle du miroir du dessus. Si les deux miroirs présentent la même réflectivité, seule une fraction Fₚ/2(Fₚ+γ) des photons est redirigée vers le haut.

L'utilisation de deux cavités de taille différente peut également être avantageuse. En effet, lorsque deux cavités identiques sont utilisées, comme dans l'exemple considéré ci-dessus, l'accélération de l'émission spontanée est la même pour les deux transitions. Cependant, il peut être intéressant de réaliser une accélération de l'émission spontanée plus forte pour l'exciton que pour le biexciton. En effet, la plupart des boîtes quantiques présentent une petite levée de dégénérescence des états excitoniques qui peut être provoquée par une légère anisotropie de forme ou des fonctions d'onde des porteurs dans la boîte quantique. Si cette levée de dégénérescence est supérieure à la largeur spectrale de la transition, les paires de photons émis ne sont plus intriquées. Une solution à ce problème consiste à élargir la transition X→0 grâce à l'accélération de l'émission spontanée (voir l'article précité de T. M. Stace et al.). Cela est rendu possible par l'utilisation d'une molécule photonique dissymétrique, dans laquelle la cavité µP₁ contenant la cavité est légèrement plus large que l'autre cavité µP₂ (r₁ supérieur à r₂ d'environ 2%). De cette façon, le champ électrique du mode liant L₁, résonant avec l'exciton X, est plus intense que celui du mode anti-liant AL₁, résonant avec le biexciton XX. L'effet Purcell est donc plus fort pour la transition X→0, qui est élargie davantage que la transition XX→X. Par contre, le taux d'extraction pour les deux raies reste quasiment le même, car ce taux dépend faiblement de Fₚ dès lors que Fₚ≥4-5. La figure 8A montre une vue en coupe d'une telle molécule photonique dissymétrique, et la figure 8B la distribution spatiale d'intensité optique à l'intérieur de ladite molécule pour les modes AL₁ et L₁ qui, dans cet exemple, sont résonants avec les transitions XX→X et X→0 respectivement.

Si la transition X→0 est à plus haute énergie que la transition XX→X, le principe décrit ci-dessus s'applique, en réduisant cette fois le diamètre du pilier contenant la boîte quantique.

L'utilisation d'un contrôle en température pour réaliser l'accord spectral entre les modes de la cavité et les raies E_{X} et E_{XX} convient à une démonstration de principe ; pour des applications pratiques, il est préférable d'exploiter l'effet Stark, en appliquant un champ électrique selon l'axe z. Voir à ce propos l'article de A. Laucht et al. « Electrical control of spontaneous emission and strong coupling for a single quantum dot », New, J. Phys. 11, 023034 (2009).

Le pompage de la cavité peut être optique, par couplage avec une source lumineuse de pompage telle qu'un laser semiconducteur. Cette technique a été utilisée pour valider le principe de l'invention. Pour des applications industrielles, il parait préférable d'avoir recours à un pompage électrique, au moyen de deux électrodes déposées aux extrémités de la cavité à micropilier (l'électrode supérieure étant en forme d'anneau pour permettre l'extraction des photons). Le pompage électrique d'une boîte quantique située à l'intérieur d'une cavité à micropilier a été récemment démontré dans par C. Böckler et al. « Electrically driven high-Q quantum dot-micropillar cavities », Appl. Phys. Lett. 92, 091107 (2008).

La fabrication de sources selon l'invention exploite une technique développée récemment par une équipe dont font partie les présents inventeurs : voir l'article de A. Dousse et al. « Controlled Light-Matter Coupling for a Single Quantum Dot Embedded in a Pillar Microcavity Using Far-Field Optical Lithography », Phys. Rev. Lett. 101, 267404 (2008).

Premièrement, comme le montre la figure une microcavité planaire CP est réalisée par épitaxie par jet moléculaire, contenant en son centre un plan dans lequel se trouve une distribution aléatoire de boîtes quantiques BQ avec une densité de 10⁸ ou 10⁹ boîtes par cm². Il existe une dispersion statistique des dimensions des boîtes quantiques, et donc de leur longueur d'onde d'émission ; cependant, le maximum d'émission de la distribution inhomogène des boîtes quantiques est centré sur le mode de la cavité optique planaire. La surface de l'échantillon est ensuite protégée pour effectuer un recuit thermique rapide à haute température. Il a été montré que de tels recuits conduisent à réduire la levée de dégénérescence des états de l'exciton : D. J. P. Ellis, et al., « Control of fine-structure splitting of individual InAs quantum dots by rapid thermal annealing », Appl. Phys. Lett. 90, 011907 (2007). Le recuit est choisi de façon à réduire cette levée de dégénérescence pour l'ensemble des boîtes quantiques.

La microcavité planaire contenant les boîtes quantiques est enduite d'une couche de résine photosensible RP et refroidie à une basse température (typiquement 10 K). Un laser rouge LR, insusceptible d'insoler la résine, balaye sa surface. La longueur d'onde de ce laser est choisie de manière à exciter l'émission par fluorescence (F) des boîtes quantiques ; la longueur d'onde de cette émission permet d'identifier et donc de sélectionner les boîtes quantiques présentant les propriétés énergétiques voulue. En détectant le maximum de l'émission de chaque boîte quantique sélectionnée, il est possible de repérer sa position avec une précision de l'ordre de la dizaine de nm. Un second laser vert LV, se propageant de manière coaxiale audit laser rouge, permet alors d'insoler la résine à une position donnée par rapport à l'émetteur unique. Pour réaliser une molécule photonique, la résine est d'abord insolée de façon centrée sur la boîte quantique, puis l'échantillon est déplacé de la distance d pour insoler une seconde cavité. Les paramètres D et d sont choisis en mesurant les énergies des transitions X→0 et XX→X. L'échantillon est ensuite remonté à la température ambiante, la résine développée. Un dépôt métallique suivi d'un lift-off sert ensuite à la gravure des molécules. Un grand nombre de molécules photoniques peuvent ainsi être réalisées en une seule étape de lithographie, ce qui permet d'obtenir un cout de fabrication relativement faible.

On remarquera que, conformément à cette technique de fabrication, la molécule photonique est réalisée autour de l'émetteur (boîte quantique), et en fonction de la longueur d'onde des deux transitions de ce dernier. Cela ne serait pas possible, ou serait beaucoup plus difficile, si les deux cavités constituant la molécule photonique étaient superposées au lieu d'être disposées côte à côte.

Le refroidissement à température cryogénique est nécessaire, au moins dans certains cas, pour pouvoir observer la fluorescence des boîtes quantiques. En fonction de la nature desdites boîtes, l'opération peut être effectuée à une température plus élevée.

## Revendications

1. Source de paires de photons intriqués en polarisation comportant un émetteur quantique (BQ) présentant un état fondamental (0), deux états (X) à une excitation élémentaire, dégénérés et de spin différent, et un état (XX) à deux excitations élémentaires ; **caractérisé en ce qu'**elle comporte également une molécule photonique comprenant une première cavité optique à micropilier à symétrie circulaire (µP₁) dans laquelle est inséré ledit émetteur quantique et une deuxième cavité optique à micropilier à symétrie circulaire (µP₂) couplée avec ladite première cavité ; dans laquelle les diamètres de la première et de la deuxième cavité, ainsi que leur distance, sont choisis de telle manière que l'ensemble constitué par les deux cavités couplées présente une première paire (AL₁+, AL₁-) de modes dégénérés en polarisation et résonants avec les transitions entre l'état à deux excitations élémentaires et les deux états dégénérés à une excitation élémentaire de l'émetteur quantique, et une deuxième paire (L₂+, L₂-) de modes dégénérés en polarisation et résonantes avec les transitions entre lesdits états dégénérés à une excitation élémentaire et l'état fondamental ; dans laquelle les modes de chacune desdites paires présentent des diagrammes des rayonnements se recouvrant à 70% ou plus, et de préférence de 80% ou plus et dans laquelle les cavités sont agencées côte à côte dans un plan perpendiculaire à la direction d'émission de la lumière lumière ; des modes ou des états quantiques étant considérés dégénérés lorsqu'ils présentent un écart énergétique inférieur à leur largeur spectrale.

2. Source de paires de photons intriqués en polarisation selon la revendication 1, dans laquelle la géométrie desdites cavités optiques est choisie de manière à provoquer une accélération par effet Purcell de l'émission spontanée des transitions entre l'état à deux excitations élémentaires et les deux états dégénérés à une excitation élémentaire de l'émetteur quantique, ainsi que des transitions entre lesdits états dégénérés à une excitation élémentaire et l'état fondamental.

3. Source de paires de photons intriqués en polarisation selon la revendication 2, dans laquelle ladite accélération de l'émission spontanée est **caractérisée par** un rapport Fₚ/(Fₚ+γ)>0,5 et de préférence Fₚ/(Fₚ+γ)>0,75, où Fₚ est le facteur de Purcell du mode optique de ladite transition et γ le taux normalisé d'émission spontanée de ladite transition dans tous les autres modes optiques.

4. Source de paires de photons intriqués en polarisation selon l'une des revendications 2 ou 3, dans laquelle la géométrie des cavités couplées est choisie de telle manière que le facteur de Purcell des transitions entre les états dégénérés à une excitation élémentaire et l'état fondamental soit plus élevé que celui des transitions entre l'état à deux excitations élémentaires et les deux états dégénérés à une excitation élémentaire.

5. Source de paires de photons intriqués en polarisation selon la revendication 4, dans laquelle les deux cavités couplées présentent des dimensions différentes.

6. Source de paires de photons intriqués en polarisation selon l'une des revendications précédentes comportant des moyens de pompage électrique ou optique dudit émetteur quantique.

7. Source de paires de photons intriqués en polarisation selon l'une des revendications précédentes comportant des moyens d'accord en fréquence desdites cavités.

8. Procédé de fabrication d'une source de paires de photons intriqués en polarisation selon l'une des revendications précédentes comportant les étapes consistant à :
- réaliser une structure constituée par un premier empilement de couches diélectriques formant miroir de Bragg ; une couche active contenant des émetteurs quantiques ; et un deuxième empilement de couches diélectriques formant miroir de Bragg ;
- déposer une couche de résine photosensible sur la surface de ladite structure ;
- balayer ladite surface avec un premier faisceau laser non susceptible d'insoler la résine, mais susceptible de stimuler la fluorescence des émetteurs quantiques ;
- sélectionner les émetteurs quantiques présentant des propriétés électroniques voulues sur la base de leur longueur d'onde de fluorescence ;
- déterminer la position d'au moins un desdits émetteurs quantiques par mesure de la lumière de fluorescence émise en réponse à la stimulation par ledit premier faisceau laser ; et
- insoler la résine au moyen d'un deuxième faisceau laser de manière à définir des régions de fabrication par lithographie desdites première et deuxième cavités, la résine étant d'abord insolée de façon centrée sur l'émetteur quantique dont la position a été déterminée, puis l'échantillon étant déplacé pour insoler une seconde cavité.

## Patentansprüche

1. Polarisationsverschränkte Photonenpaarquelle, beinhaltend einen Quantensender (BQ), welcher einen Grundzustand (0), zwei degenerierte Zustände (X) mit einer Elementaranregung und mit unterschiedlichem Spin und einen Zustand (XX) mit zwei Elementaranregungen aufweist; **dadurch gekennzeichnet, dass** sie zudem ein Photonenmolekül beinhaltet, welches einen ersten optischen Hohlraum mit kreissymmetrischem Mikropfeiler (µP₁) aufweist, in welches der Quantensender eingesetzt ist, und einen zweiten optischen Hohlraum mit kreis symmetrischem Mikropfeiler (µP₂), welcher mit dem ersten Hohlraum gekoppelt ist; wobei die Durchmesser des ersten und des zweiten Hohlraums sowie deren Abstand so gewählt sind, dass die durch die beiden gekoppelten Hohlräume gebildete Anordnung ein erstes Paar (AL₁₊, AL₁₋) polarisationsdegenerierter Moden aufweist, welche mit den Übergängen zwischen dem Zustand mit zwei Elementaranregungen und den beiden degenerierten Zuständen mit einer Elementaranregung des Quantensender in Resonanz sind, und ein zweites Paar (L₂₊, L₂₋) polarisationsdegenerierter Moden, welche mit den Übergängen zwischen den degenerierten Zuständen mit einer Elementaranregung und dem Grundzustand in Resonanz sind; wobei die Moden eines jeden der Paare Strahlungsdiagramme aufweisen, welche einander zu 70 % oder darüber überlappen, und vorzugsweise zu 80 % oder darüber und wobei die Hohlräume Seite an Seite in einer Ebene angeordnet sind, welche rechtwinklig zur Senderichtung des Lichts liegt; wobei Moden oder quantische Zustände als degeneriert betrachtet werden, wenn sie eine energetische Abweichung aufweisen, welche kleiner als ihre spektrale Breite ist.

2. Polarisationsverschränkte Photonenpaarquelle nach einem der Ansprüche 1, bei welchem die Geometrie der optischen Hohlräume so gewählt ist, dass sie eine Beschleunigung durch Purcell-Effekt der spontanen Emission der Übergänge zwischen dem Zustand mit zwei Elementaranregungen und den beiden degenerierten Zuständen mit einer Elementaranregung des Quantensenders sowie der Übergänge zwischen den degenerierten Zuständen mit einer Elementaranregung und dem Grundzustand hervorrufen.

3. Polarisationsverschränkte Photonenpaarquelle nach Anspruch 2, bei welcher die Beschleunigung der spontanen Emission durch ein Verhältnis F_{P}/(F_{P}+ γ)>0,5 gekennzeichnet ist, und vorzugsweise F_{P}/(F_{P}+ γ)>0,75, wobei F_{P} der Purcell-Faktor des optischen Modes des Übergangs ist und y die normalisierte spontane Emissionsrate des Übergangs in alle anderen optischen Moden ist.

4. Polarisationsverschränkte Photonenpaarquelle nach einem der Ansprüche 2 oder 3, bei welcher die Geometrie der gekoppelten Hohlräume so gewählt ist, dass der Purcell-Faktor der Übergänge zwischen den degenerierten Zuständen mit einer Elementaranregung und dem Grundzustand höher ist als derjenige der Übergänge zwischen dem Zustand mit zwei Elementaranregungen und den beiden degenerierten Zuständen mit einer Elementaranregung.

5. Polarisationsverschränkte Photonenpaarquelle nach Anspruch 4, bei welcher die beiden gekoppelten Hohlräume unterschiedliche Abmessungen aufweisen.

6. Polarisationsverschränkte Photonenpaarquelle nach einem der vorhergehenden Ansprüche, beinhaltend elektrische oder optische Mittel zum Pumpen des Quantensenders.

7. Polarisationsverschränkte Photonenpaarquelle nach einem der vorhergehenden Ansprüche, beinhaltend Mittel zur Frequenzabstimmung der Hohlräume.

8. Verfahren zur Herstellung einer polarisationsverschränkten Photonenpaarquelle nach einem der vorhergehenden Ansprüche, folgende Schritte beinhaltend:
- Herstellen einer Struktur, bestehend aus einem ersten Stapel dielektrischer Schichten, welche einen Bragg-Spiegel bilden; einer aktiven Schicht, welche Quantensender enthält; und einem zweiten Stapel dielektrischer Schichten, welche einen Bragg-Spiegel bilden;
- Ablagern einer lichtempfindlichen Harzschicht auf der Oberfläche der Struktur;
- Abtasten der Oberfläche mit einem ersten Laserstrahl, der nicht geartet ist, das Harz zu belichten, jedoch geartet ist, die Fluoreszenz der Quantensender zu stimulieren;
- Auswählen der Quantensender, welche gewünschte elektronische Eigenschaften aufweisen, auf der Grundlage ihrer Fluoreszenzwellenlänge;
- Bestimmen der Position mindestens eines der Quantensender durch Messen des ausgesandten Fluoreszenzlichts in Reaktion auf die Stimulation durch den ersten Laserstrahl; und
- Belichten des Harzes mithilfe eines zweiten Laserstrahls, um Lithografie-Fertigungsbereiche des ersten und des zweiten Hohlraums zu definieren, wobei das Harz zuerst zentriert auf den Quantensender belichtet wird, dessen Position bestimmt wurde, wonach die Probe verschoben wird, um einen zweiten Hohlraum zu belichten.

## Claims

1. A polarization-entangled photon pair source including a quantum emitter (BQ) that presents a ground state (0), two states (X) with single elementary excitation, which states are degenerate and of different spins, and a state (XX) with two elementary excitations; **characterized in that** it also comprises a photonic molecule comprising a first optical cavity with circular symmetry micropillar (µPi) into which said quantum emitter is inserted and a second optical cavity with circular symmetry micropillar (µP2) coupled with said first cavity; wherein the diameters of the first and second cavities, as well as their distance, are selected in such a manner that the assembly constituted by the two coupled cavities presents a first pair of polarization-degenerate modes (AL₁+, AL₁-) that are resonant with the transitions between the state with two elementary excitations and the two degenerate states with elementary excitation of the quantum remitter, and a second pair of polarization-degenerate modes (L2 +, L2-) that are resonant with the transitions between said degenerate states with elementary excitation and the ground state; wherein the modes of each of said pairs present radiation patterns that overlap by 70% or more, and preferably by 80% or more and wherein the cavities are arranged side by side in a plane perpendicular to the direction of light emission; modes or quantum states being considered degenerate when they present a lower energy gap than their spectral width.

2. A polarization-entangled photon pair source according to claim 1, wherein the geometry of said optical cavities is selected in such a manner as to cause acceleration by Purcell effect of spontaneous emission of the transitions between state with two elementary excitations and the two degenerate states to elementary excitation of the quantum emitter, as well as transitions between said states degenerate to elementary excitation and the ground state.

3. A polarization-entangled photon pair source according to claim 2, wherein said spontaneous emission acceleration is **characterized by** a ratio Pₚ/(Pₚ+γ)1≥0.5 and preferably Fₚ/(Fₚ+ γ)≥0.75, where Fₚ is the Purcell factor of the optical mode of said transition, and γ is the normalized spontaneous emission ratio of said transition into all the other optical modes.

4. A polarization-entangled photon pair source according to claim 2 or claim 3, wherein the geometry of the coupled cavities is selected in such a manner that the Purcell factor for transitions between the degenerate states with single elementary excitation and the ground state is higher than the Purcell factor for transitions between the state with two elementary excitations and the two degenerate states with single elementary excitation.

5. A polarization-entangled photon pair source according to claim 4, wherein the two coupled cavities present different dimensions.

6. A polarization-entangled photon pair source according to any preceding claim, including electrical or optical pumping means for pumping said quantum emitter.

7. A polarization-entangled photon pair source according to any preceding claim, including means for frequency tuning said cavities.

8. A method of fabricating a polarization-entangled photon pair source according to any preceding claim, the method comprising the steps consisting in:
- making a structure constituted by a first stack of dielectric layers forming a Bragg mirror; an active layer containing quantum emitters; and a second stack of dielectric layers forming a Bragg mirror;
- depositing a layer of photosensitive resin on the surface of said structure;
- scanning said surface with a first laser beam unsuitable for irradiating the resin, but suitable for stimulating the fluorescence of the quantum emitters;
- selecting those quantum emitters that present desired electronic properties on the basis of their fluorescence wavelength;
- determining the position of at least one of said quantum emitters by measuring the fluorescence light emitted in response to the stimulation by said first laser beam; and
- irradiating the resin by means of a second laser beam so as to define regions for lithographic fabrication of said first and second cavities, the resin being first irradiated in a centered manner on the quantum emitter whose position has been determined, the sample being then moved to irradiate a second cavity.
